(19)

Europäisches Patentamt

European Patent Office

Office européen des brevets

(11) **EP 2 174 834 A2**

(12) **EUROPEAN PATENT APPLICATION**

(43) Date of publication:
**14.04.2010 Bulletin 2010/15**

(51) Int Cl.:
***B60R 1/00*** *(2006.01)*

(21) Application number: **09012775.4**

(22) Date of filing: **08.10.2009**

| | |
|---|---|
| (84) Designated Contracting States: **AT BE BG CH CY CZ DE DK EE ES FI FR GB GR HR HU IE IS IT LI LT LU LV MC MK MT NL NO PL PT RO SE SI SK SM TR** Designated Extension States: **AL BA RS** (30) Priority: **09.10.2008 JP 2008262451** | (71) Applicant: **SANYO ELECTRIC CO., LTD.** **Moriguchi-shi, Osaka 570-8677 (JP)** (72) Inventor: **Asari, Keisuke** **Osaka 570-8677 (JP)** (74) Representative: **Glawe, Delfs, Moll** **Patent- und Rechtsanwälte** **Postfach 26 01 62** **80058 München (DE)** |

(54) **Maneuvering assisting apparatus**

(57)    A maneuvering assisting apparatus (10) includes a plurality of cameras (C1-C4). Each camera is arranged in a downward attitude on a side surface of a ship hull, and captures surroundings of the ship. A CPU (12p) creates a whole-circumference bird's eye view image representing in an aerially viewed manner the surroundings of the ship, based on outputs of these cameras. Also, the CPU transparently multiplexes a graphic image representing at least an extension of the aerially viewed ship, onto the whole-circumference bird's eye view image. Moreover, the CPU non-transparently multiplexes a graphic image representing one portion of the aerially viewed ship, onto the whole-circumference bird's eye view image.

FIG.10

EP 2 174 834 A2

**Description**

CROSS REFERENCE OF RELATED APPLICATION

The disclosure of Japanese Patent Application No. 2008-262451, which was filed on October 9, 2008, is incorporated herein by reference.

BACKGROUND OF THE INVENTION

Field of the Invention

The present invention relates to a maneuvering assisting apparatus. More particularly, the present invention relates to a maneuvering assisting apparatus for assisting in maneuvering a moving object by displaying a bird's eye view image of the moving object on a monitor screen

Description of the Related Art

According to one example of this type of an apparatus, a plurality of cameras are installed in a vehicle, and an image of which the view point is above the vehicle is created based on output of these cameras. The image thus created is displayed on a monitor screen. Four corner sensors are installed one each at four corners of the vehicle. When an obstacle approaching the vehicle is sensed by any of these corner sensors, a predetermined mark is displayed on the monitor screen corresponding to an installation position of the corner sensor that has sensed the obstacle. This allows a driver to recognize an existence of the obstacle through the monitor screen.

However, in the above-described apparatus, depending on the installation location of the camera and/or a shape of the moving object, a blind spot that is captured by the camera but does not appear in the displayed image is generated around the moving object, which may lead to a decline in maneuverability.

Therefore, a primary object of the present invention is to provide a maneuvering assisting apparatus capable of improving maneuverability.

SUMMARY OF THE INVENTION

A maneuvering assisting apparatus according to the present invention, comprises: an imager, arranged in a downward attitude in a moving object, which captures surroundings of the moving object; a creator which creates a surrounding image representing in an aerially viewed manner the surroundings of the moving object, based on output of the imager; and a first multiplexer which transparently multiplexes a first moving-object image representing at least an extension of the aerially viewed moving object, onto the surrounding image created by the creator.

When the first moving-object image representing at least the extension of the aerially viewed moving object is multiplexed onto the surrounding image representing in an aerially viewed manner the surroundings of the moving object, a positional relationship between the moving object and its surroundings becomes clear. Moreover, when the first moving-object image is transparently multiplexed, a blind spot in the surroundings of the moving object is decreased. As a result, a maneuverability of the moving object is improved.

Preferably, the first moving-object image is equivalent to an image representing a whole of the aerially viewed moving object

More preferably, further comprised is a second multiplexer which multiplexes a second moving-object image representing one portion of the aerially viewed moving object, onto the surrounding image created by the creator.

Preferably, the second multiplexer non-transparently multiplexes the second moving-object image.

Preferably, the moving object is equivalent to a ship, and a size of one portion of the moving object represented by the second moving-object image is equivalent to a size of a cut-out surface obtained by cutting out the moving object with a draft line.

A maneuvering assisting apparatus according to the present invention, further comprised are: an inclination detector which detects a change in inclination and/or altitude of the moving object; and a corrector which corrects the size of one portion of the moving object represented by the second moving-object image, with reference to a detection result of the inclination detector.

The above described features and advantages of the present invention will become more apparent from the following detailed description of the embodiment when taken in conjunction with the accompanying drawings.

BRIEF DESCRIPTION OF THE DRAWINGS

Figure 1 is a block diagram showing a configuration of one embodiment of the present invention;
Figure 2(A) is an illustrative view showing a state that a ship is viewed from front;
Figure 2(B) is an illustrative view showing a state that the ship is viewed from rear;
Figure 3(A) is an illustrative view showing a state that a ship is viewed from a lateral side;
Figure 3(B) is an illustrative view showing a state that the ship is viewed from above;
Figure 4 is an illustrative view showing one example of a visual field captured by a plurality of cameras attached to a ship;
Figure 5(A) is an illustrative view showing one example of a bird's eye view image based on output of the cameras;
Figure 5(B) is an illustrative view showing one example of a bird's eye view image based on output of a right camera;
Figure 5(C) is an illustrative view showing one example of a bird's eye view image based on output of a rear camera;
Figure 5(D) is an illustrative view showing one example of a bird's eye view image based on output of a left camera;
Figure 6 is an illustrative view showing one example of a whole-circumference bird's eye view image based on the bird's eye view images shown in Figure 5(A) to Figure 5(D);
Figure 7 is an illustrative view showing one example of ship-maneuvering assisting image outputted from a display device;
Figure 8 is an illustrative view showing an angle of a camera attached to a ship;
Figure 9 is an illustrative view showing a relationship among a camera coordinate system, a coordinate system on an imaging surface, and a world coordinate system;
Figure 10 is a flowchart showing one portion of an operation of a CPU applied to the embodiment in Figure 1;
Figure 11 is a block diagram showing a configuration of another embodiment;
Figure 12(A) is an illustrative view showing one example of a state where a ship in a standard attitude is viewed from a left side;
Figure 12(B) is an illustrative view showing one example of a state where a ship inclined to front and rear is viewed from a left side;
Figure 13 (A) is an illustrative view showing one example of a ship-maneuvering assisting image outputted from a display device corresponding to an attitude shown in Figure 12(A);
Figure 13(B) is an illustrative view showing one example of a ship-maneuvering assisting image outputted from a display device corresponding to an attitude shown in Figure 12(B);
Figure 14 is a flowchart showing one portion of an operation of a CPU applied to the embodiment in Figure 11;
Figure 15 is an illustrative view showing one example of a ship-maneuvering assisting image outputted from a display device of another embodiment; and
Figure 16 is a flowchart showing one portion of an operation of a CPU applied to the other embodiment.

DETAILED DESCRIPTION OF THE PREFERRED EMBODIMENTS

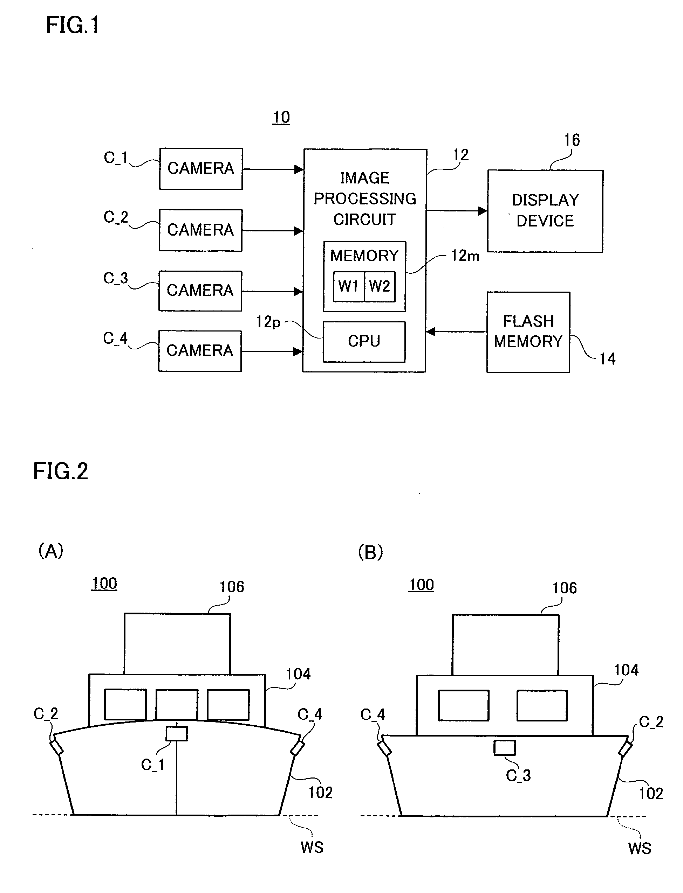

A ship-maneuvering assisting apparatus 10 of this embodiment shown in Figure 1 includes four cameras C_1 to C_4. Each of the cameras C_1 to C_4 outputs object scene images P_1 to P_4 in synchronization with a common timing signal at every 1/30 seconds. The outputted object scene images P_1 to P_4 are fetched by an image processing circuit 12.

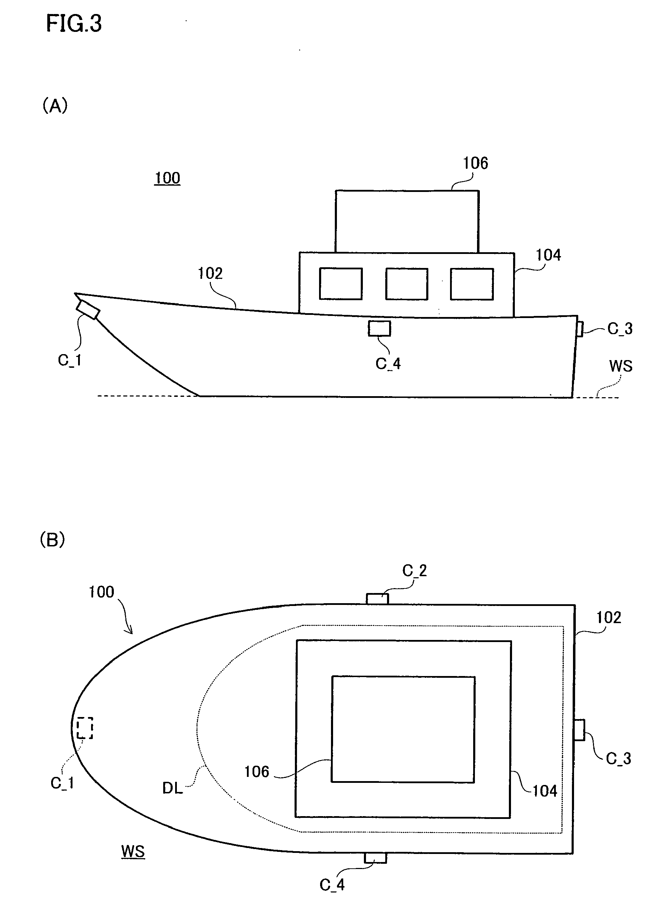

The ship-maneuvering assisting apparatus 10 is loaded in a ship 100 shown in Figure 2(A) and Figure 2(B), and Figure 3(A) and Figure 3(B). Roughly, the ship 100 is configured by a ship hull 102, a cabin 104, and a navigation bridge 106. A cross section, obtained by cutting the ship hull 102 orthogonal to a height direction, has a width that increases concurrently with an increase in altitude. The cabin 104 is formed in a box shape at a substantially center of a top surface of the ship hull 102, and the navigation bridge 106 is formed in a box shape at a top-surface center of the cabin 104. A width of the cabin 104 is smaller than that of the top surface of the ship hull 102, and a width of the navigation bridge 106 is also smaller than that of the cabin 104.

The camera C_1 is installed at a leading end, i.e., a bow, of the ship hull 102, and the camera C_2 is installed at a substantially center in a length direction of a starboard upper portion of the ship hull 102. Furthermore, the camera C_3 is installed at an upper portion center of a rear surface of the ship hull 102, and the camera C_4 is installed at a substantially center in a length direction of a port upper portion of the ship hull 102. An optical axis of the camera C_1 extends obliquely downward forward of the ship hull 102, and an optical axis of the camera C_2 extends obliquely downward rightward of the ship hull 102. Moreover, an optical axis of the camera C_3 extends obliquely downward rearward of the ship hull 102, and an optical axis of the camera C_4 extends obliquely downward leftward of the ship hull 102.

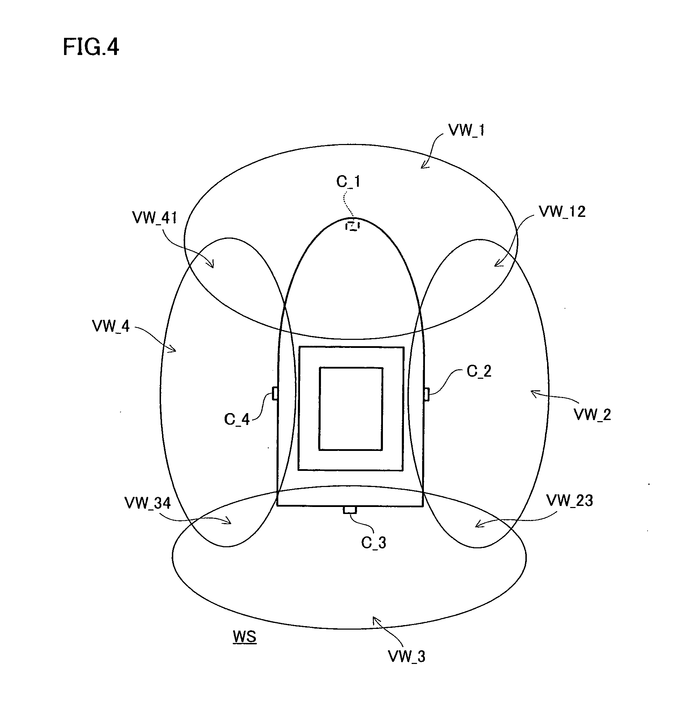

With reference to Figure 4, the camera C_1 has a visual field VW_1 capturing a front side of the ship hull 102, the camera C_2 has a visual field VW_2 capturing a right side of the ship hull 102, the camera C_3 has a visual field VW_3 capturing a rear side of the ship hull 102, and the camera C_4 has a visual field VW_4 capturing a left side of the ship hull 102. Furthermore, the visual fields VW_1 and VW_2 have a common visual field VW_12, the visual fields VW_2 and VW_3 have a common visual field VW_23, the visual fields VW_3 and VW_4 have a common visual field VW_34, and the visual fields VW_4 and VW_1 have a common visual field VW_41.

More specifically, the visual field VW_1 captures both an outer panel of a front portion of the ship hull 102 and a water surface (sea surface) WS forward of the ship hull 102, over a draft line DL (see Figure 3(B)) in the front portion of the ship hull 102. The visual field VW_2 captures both an outer panel of the starboard of the ship hull 102 and the water surface WS rightward of the ship hull 102, over the draft line DL of the starboard of the ship hull 102. Furthermore, the visual field VW_3 captures both an outer panel of a rear portion of the ship hull 102 and the water surface WS rearward of the ship hull 102, over the draft line DL of the rear portion of the ship hull 102. Moreover, the visual field VW_4 captures both an outer panel of the port of the ship hull 102 and the water surface WS leftward of the ship hull 102, over the draft line DL on the port of the ship hull 102. In other words, a situation around the draft line DL of the ship hull 102 is comprehended by the cameras C_1 to C_4.

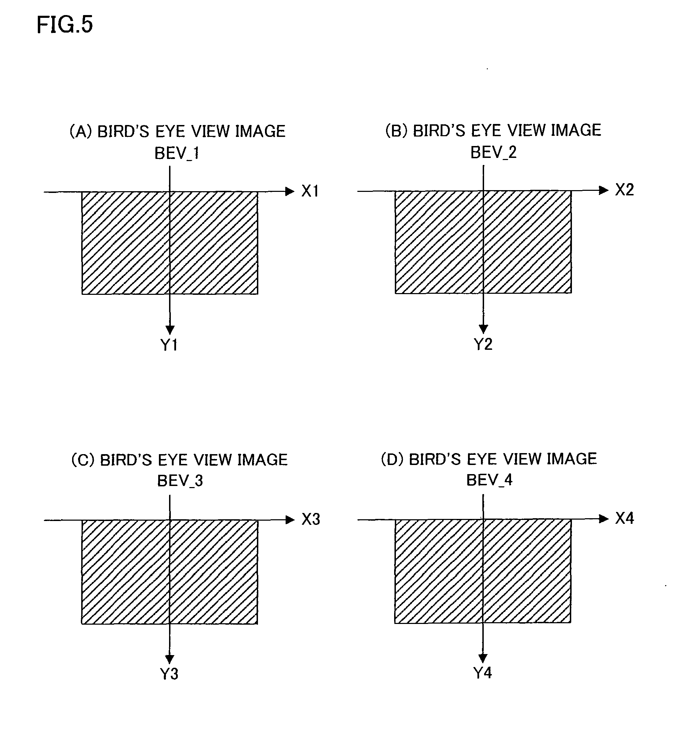

Returning to Figure 1, a CPU 12p arranged in the image processing circuit 12 produces a bird's eye view image BEV_1 shown in Figure 5(A) based on the object scene image P_1 outputted from the camera C_1, and produces a bird's eye view image BEV_2 shown in Figure 5(B) based on the object scene image P_2 outputted from the camera C_2. The CPU 12p further produces a bird's eye view image BEV_3 shown in Figure 5(C) based on the object scene image P_3 outputted from the camera C_3, and a bird's eye view image BEV_4 shown in Figure 5(D) based on the object scene image P_4 outputted from the camera C_4.

The bird's eye view image BEV_1 is equivalent to an image captured by a virtual camera looking down on the visual field VW_1 in a perpendicular direction, and the bird's eye view image BEV_2 is equivalent to an image captured by a virtual camera looking down on the visual field VW_2 in a perpendicular direction. Moreover, the bird's eye view image BEV_3 is equivalent to an image captured by a virtual camera looking down on the visual field VW_3 in a perpendicular direction, and the bird's eye view image BEV_4 is equivalent to an image captured by a virtual camera looking down on the visual field VW_4 in a perpendicular direction.

According to Figure 5(A) to Figure 5(D), the bird's eye view image BEV_1 has a bird's eye view coordinate system (X1, Y1), the bird's eye view image BEV_2 has a bird's eye view coordinate system (X2, Y2), the bird's eye view image BEV_3 has a bird's eye view coordinate system (X3, Y3), and the bird's eye view image BEV_4 has a bird's eye view coordinate system (X4, Y4).

The bird's eye views BEV_1 to BEV_4 are created based on an assumption that the water surface WS is an origin in the height direction. Furthermore, the created bird's eye views BEV_1 to BEV_4 are held in a work area W1 of a memory 12m.

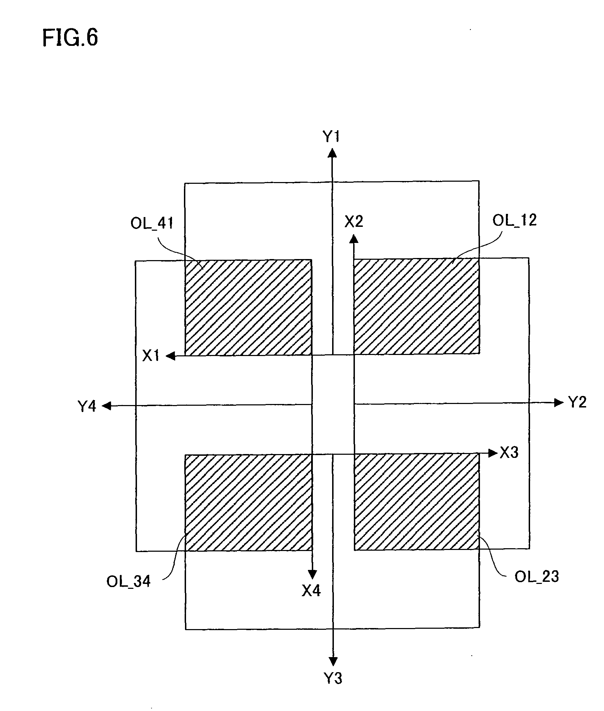

Subsequently, the CPU 12p respectively combines the bird's eye view images BEV_1 to BEV_4 through a coordinate transformation. The bird's eye view images BEV_2 to BEV_4 are rotated and/or moved by using the bird's eye view image BEV_1 as a reference. As a result, a whole-circumference bird's eye view image shown in Figure 6 is obtained in a work area W2 of the memory 12m.

In Figure 6, an overlapping area OL_12 is equivalent to an area in which the common visual field VW_12 is reproduced, and an overlapping area OL_23 is equivalent to an area in which the common visual field VW_23 is reproduced. Moreover, an overlapping area OL_34 is equivalent to an area in which the common visual field VW_34 is reproduced, and an overlapping area OL_41 is equivalent to an area in which the common visual field VW_41 is reproduced.

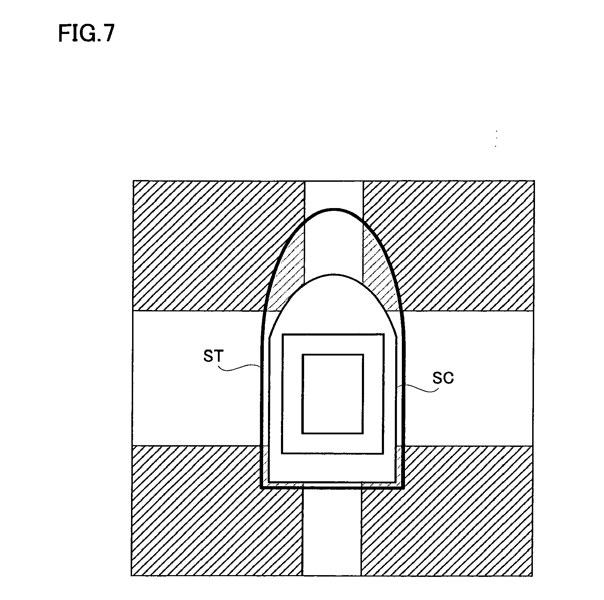

Thereafter, in order to display a ship-maneuvering assisting image shown in Figure 7 on the monitor screen of the display device 16 set within the navigation bridge 106, the CPU 12p multiplexes a graphic image ST or SC that imitates an upper portion of the ship 100, onto a center of the whole-circumference bird's eye view image on the work area W2, cuts out one portion of an image in which the overlapping areas OL_12 to OL_41 are positioned at four corners, and then, outputs one portion of the cut-out image, i.e., the ship-maneuvering assisting image, toward the display device 16.

Herein, the graphic image ST is equivalent to an image representing a whole of the aerially viewed ship 100, and is transparently (translucently) multiplexed onto the whole-circumference bird's eye view image. A contour of the graphic image ST is emphatically depicted by using a bold line. On the other hand, the graphic image SC is equivalent to an image representing one portion of the aerially viewed ship 100, and is non-transparently multiplexed onto the whole-circumference bird's eye view image from above the graphic image ST A size of one portion of the ship 100 represented by the graphic image GC is equivalent to a size of a cut-out surface obtained by cutting the ship 100 with the draft line DL.

When an image, such as the graphic image ST, which enables recognition of an extension of the aerially viewed ship 100, is multiplexed onto the whole-circumference bird's eye view image that represents in an aerially viewed manner surroundings of the ship 100, a positional relationship between the ship 100 and its surroundings becomes clear. Moreover, when the graphic image ST is transparently multiplexed onto the whole-circumference bird's eye view image, a blind spot in the surroundings of the ship 100 (more specifically, surroundings of the draft line DL) is decreased As a result, a maneuverability of the ship 100 improves. Furthermore, when the graphic image SC that is equivalent to the size of the cut-out surface obtained by cutting the ship 100 with the draft line DL is multiplexed onto the whole-circumference bird's eye view image, its visual appearance is improved.

The bird's eye view images BEV_1 to BEV_4 are created according to the following procedure. It is noted that because each of the bird's eye view images BEV_1 to BEV_4 is created according to the same procedure, a procedure for creating the bird's eye view image BEV_3 is described as a representative example of the procedure for creating the bird's eye view images BEV_1 to BEV_4.

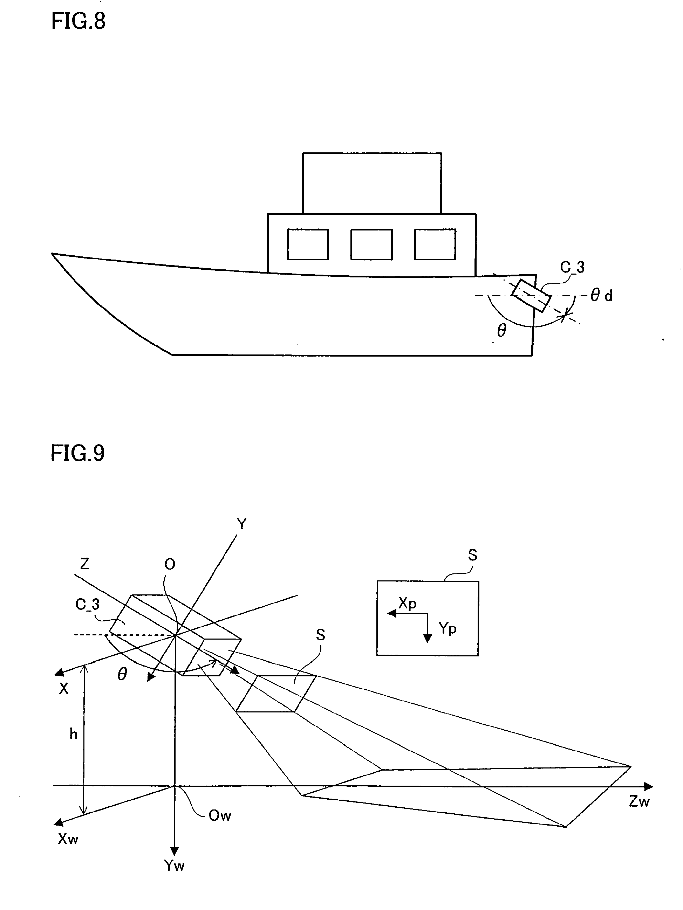

With reference to Figure 8, the camera C_3 is placed, obliquely downward rearward, at an upper end center of a rear surface of the ship hull 102. If an angle of depression of the camera C_3 is assumed as "θd", an angle θ shown in Figure 8 is equivalent to "180 degrees-θd". Furthermore, the angle θ is defined in a range of 90 degrees<θ<180 degrees.

Figure 9 shows a relationship among a camera coordinate system (X, Y, Z), a coordinate system (Xp, Yp) on an imaging surface S of the camera C_3, and a world coordinate system (Xw, Yw, Zw). The camera coordinate system (X, Y, Z) is a three-dimensional coordinate system having an X axis, Y axis, and Z axis as coordinate axes. The coordinate system (Xp, Yp) is a two-dimensional coordinate system having an Xp axis and Yp axis as coordinate axes. The world coordinate system (Xw, Yw, Zw) is a three-dimensional coordinate system having an Xw axis, Yw axis, and Zw axis as coordinate axes.

In the camera coordinate system (X, Y, Z), an optical center of the camera C3 is an origin O. In this state, the Z axis is defined in an optical axis direction, the X axis is defined in a direction orthogonal to the Z axis and parallel to the water surface WS, and the Y axis is defined in a direction orthogonal to the Z axis and X axis. In the coordinate system (Xp, Yp) of the imaging surface S, a center of the imaging surface S is an origin O. In this state, the Xp axis is defined in a lateral direction of the imaging surface S and the Yp axis is defined in a vertical direction of the imaging surface S.

In the world coordinate system (Xw, Yw, Zw), an intersecting point between a perpendicular line passing through the origin O of the camera coordinate system (X, Y, Z) and the water surface WS is an origin Ow In this state, the Yw axis is defined in a direction vertical to the water surface WS, the Xw axis is defined in a direction parallel to the X axis of the camera coordinate system (X, Y, Z), and the Zw axis is defined in a direction orthogonal to the Xw axis and Yw axis. Also, a distance from the Xw axis to the X axis is "h", and an obtuse angle formed by the Zw axis and Z axis is equivalent to the above described angle θ.

When coordinates in the camera coordinate system (X, Y, Z) are written as (x, y, z), "x", and "z" respectively indicate an X-axis component, a Y-axis component, and a Z-axis component in the camera coordinate system (X, Y, Z). When coordinates in the coordinate system (Xp, Yp) on the imaging surface S are written as (xp, yp), "xp" and "yp" respectively indicate an Xp-axis component and a Yp-axis component in the coordinate system (Xp, Yp) on the imaging surface S. When coordinates in the world coordinate system (Xw, Yw, Zw) are written as (xw, yw, zw), "xw", "yw", and "zw" respectively indicate an Xw-axis component, a Yw-axis component, and a Zw-axis component in the world coordinate system (Xw, Yw, Zw).

A transformation equation for transformation between the coordinates (x, y, z) of the camera coordinate system (X Y, Z) and the coordinates (xw, yw, zw) of the world coordinate system (Xw, Yw, Zw) is represented by Equation 1 below:

[Equation 1]

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} xw \\ yw \\ zw \end{bmatrix} + \begin{bmatrix} 0 \\ h \\ 0 \end{bmatrix} \right\}$$

Herein, if a focal length of the camera C_3 is assumed as "f", a transformation equation for transformation between the coordinates (xp, yp) of the coordinate system (Xp, Yp) on the imaging surface S and the coordinates (x, y, z) of the camera coordinate system (X, Y, Z) is represented by Equation 2 below:

[Equation 2]

$$\begin{bmatrix} xp \\ yp \end{bmatrix} = \begin{bmatrix} f\dfrac{x}{z} \\ f\dfrac{y}{z} \end{bmatrix}$$

Furthermore, based on Equation 1 and Equation 2, Equation 3 is obtained. Equation 3 shows a transformation equation for transformation between the coordinates (xp, yp) of the coordinate system (Xp, Yp) on the imaging surface S and the coordinates (xw, yw) of the two-dimensional water surface coordinate system (Xw, Zw).

[Equation 3]

$$\begin{bmatrix} xp \\ yp \end{bmatrix} = \begin{bmatrix} \dfrac{fxw}{h\sin\theta + zw\cos\theta} \\ \dfrac{(h\cos\theta - zw\sin\theta)f}{h\sin\theta + zw\cos\theta} \end{bmatrix}$$

Furthermore, a bird's eye view coordinate system (X3, Y3) or coordinate system of the bird's eye view image BEV_3 shown in Figure 5(C) is defined. The bird's eye view coordinate system (X3, Y3) is a two-dimensional coordinate system having an X3 axis and Y3 axis as coordinate axes. When coordinates in the bird's eye view coordinate system (X3, Y3) are written as (x3, y3), a position of each pixel forming the bird's eye view image BEV_3 is represented by coordinates (x3, y3). "x3" and "y3" respectively indicate an X3-axis component and a Y3-axis component in the bird's eye view coordinate system (X3, Y3).
A projection from the two-dimensional coordinate system (Xw, Zw) that represents the water surface WS, onto the bird's eye view coordinate system (X3, Y3) is equivalent to a so-called parallel projection. When a height of a virtual camera, i.e., a height of a virtual view point, is assumed as "H", a transformation equation for transformation between the coordinates (xw, zw) of the two-dimensional coordinate system (Xw, Zw) and the coordinates (x3, y3) of the bird's eye view coordinate system (X3, Y3) is represented by Equation 4 below. A height H of the virtual camera is previously determined.

[Equation 4]

$$\begin{bmatrix} x3 \\ y3 \end{bmatrix} = \dfrac{f}{H} \begin{bmatrix} xw \\ zw \end{bmatrix}$$

Further, based on Equation 4, Equation 5 is obtained, and based on Equation 5 and Equation 3, Equation 6 is obtained Moreover, based on Equation 6, Equation 7 is obtained. Equation 7 is equivalent to a transformation equation for transformation of the coordinates (xp, yp) of the coordinate system (Xp, Yp) on the imaging surface S into the coordinates (x3, y3) of the bird's eye view coordinate system (X3, Y3).

[Equation 5]

$$\begin{bmatrix} xw \\ zw \end{bmatrix} = \frac{H}{f} \begin{bmatrix} x3 \\ y3 \end{bmatrix}$$

[Equation 6]

$$\begin{bmatrix} xp \\ yp \end{bmatrix} = \begin{bmatrix} \dfrac{fHx3}{fh\sin\theta + Hy3\cos\theta} \\ \dfrac{f(fh\cos\theta - Hy3\sin\theta)}{fh\sin\theta + Hy3\cos\theta} \end{bmatrix}$$

[Equation 7]

$$\begin{bmatrix} x3 \\ y3 \end{bmatrix} = \begin{bmatrix} \dfrac{xp(fh\sin\theta + Hy3\cos\theta)}{fH} \\ \dfrac{fh(f\cos\theta - yp\sin\theta)}{H(f\sin\theta + yp\cos\theta)} \end{bmatrix}$$

The coordinates (xp, yp) of the coordinate system (Xp, Yp) on the imaging surface S represent the coordinates of the object scene image P_3 captured by the camera C_3. Therefore, the object scene image P_3 from the camera C_3 is transformed into the bird's eye view image BEV_3 by using Equation 7. In reality, the object scene image P_3 firstly undergoes an image process, such as a lens distortion correction, and is then transformed into the bird's eye view image BEV_3 using Equation 7.

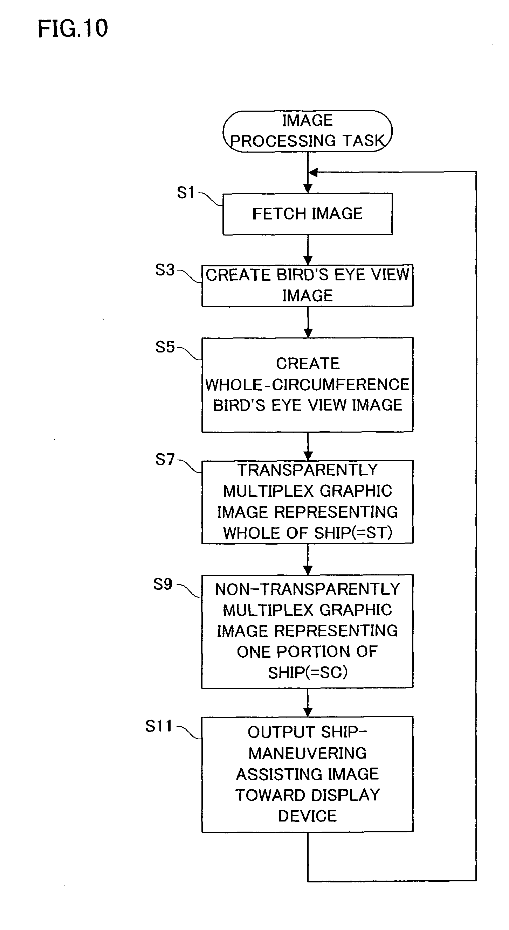

The CPU 12p specifically executes a plurality of tasks in parallel, including an image processing task shown in Figure 10. It is noted that a control program corresponding to these tasks is stored in a flash memory 14 (see Figure 1).

Firstly, in a step S1, the object scene images P_1 to P_4 are fetched from the cameras C_1 to C_4, respectively. In a step S3, based on the fetched object scene images P_1 to P_4, the bird's eye view images BEV_1 to BEV_4 are created, and the created bird's eye view images BEV_1 to BEV_4 are secured in the work area W1. In a step S5, the bird's eye view images BEV_1 to BEV_4 created in the step S3 are combined together to create a whole-circumference bird's eye view image, and the created whole-circumference bird's eye view image is secured in the work area W2.

In a step S7, the translucent graphic image ST representing a whole of the aerially viewed ship 100 is multiplexed onto the whole-circumference bird's eye view image secured in the work area W2. In a step S9, the graphic image SG representing one portion of the aerially viewed ship 100 is additionally multiplexed onto the whole-circumference bird's eye view image secured in the work area W2. In a step S11, one portion of the whole-circumference bird's eye view image onto which the graphic images ST and SG are multiplexed is cut out from the work area W2, and this cut-out image is outputted toward the display device 16 as the ship-maneuvering assisting image. Upon completion of the process in the step S11, the process returns to the step S1.

As is understood from the above description, each of the cameras C_1 to C_4 is arranged in a downward attitude on the side surfaces of the ship hull 102, and in this attitude, captures the surroundings of the ship 100. The CPU 12p creates a whole-circumference bird's eye view image (surrounding image) that represents in an aerially viewed manner the surroundings of the ship 100, based on the output of the cameras C_1 to C_4 (S3 to S5). Furthermore, the CPU 12p transparently multiplexes the graphic image ST that represents at least the extension of the aerially viewed ship 100, onto the whole-circumference bird's eye view image (S7).

When the graphic image ST that represents at least the extension of the aerially viewed ship 100 is multiplexed onto the whole-circumference bird's eye view image that represents in an aerially viewed manner the surroundings of the ship 100, the positional relationship between the ship 100 and its surroundings becomes clear. Furthermore, when the graphic image ST is transparently multiplexed, the blind spot in the surroundings of the ship 100 is decreased. As a result, a maneuverability of the ship 100 improves.

It is noted that in this embodiment, attitude information about the cameras C_1 to C_4 (specifically, the definition of the XYZ axes shown in Figure 9) that is referenced for creating the bird's eye view images BEV_1 to BEV_4 is fixed regardless of rocking of the ship hull 102 (i.e., a change in inclination and/or altitude of the ship hull 102). Furthermore, in this embodiment, a shape of the graphic image SC is also fixed.

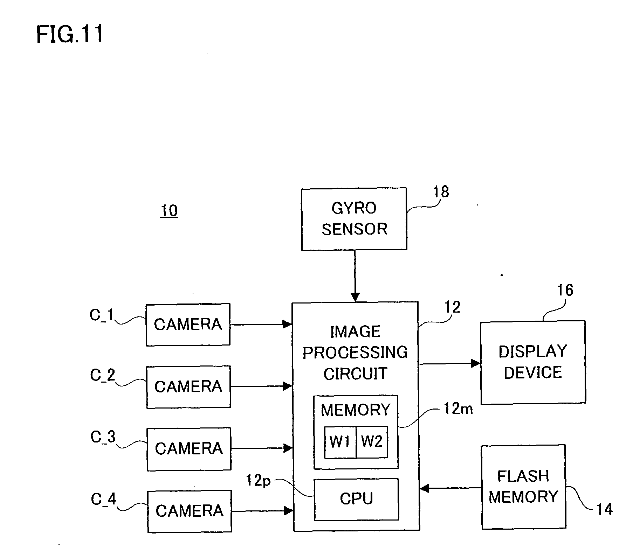

However, a gyro sensor 20 for sensing the rocking of the ship hull 102 may be optionally added as shown in Figure 11 so that the attitude information of the cameras C_1 to C_4 and the shape of the graphic image SC are corrected based on output of the gyro sensor 20.

When the attitude information of the cameras C_1 to C_4 is corrected, a deviation among the bird's eye view images BEV_1 to BEV_4 caused due to the rocking of the ship hull 102 is prevented. Furthermore, when the shape of the graphic image SC is corrected, a deviation between the shape of the graphic image SC and the cross-sectional shape of the ship hull 102 at the draft line DL, which is caused due to the rocking of the ship hull 102, is prevented.

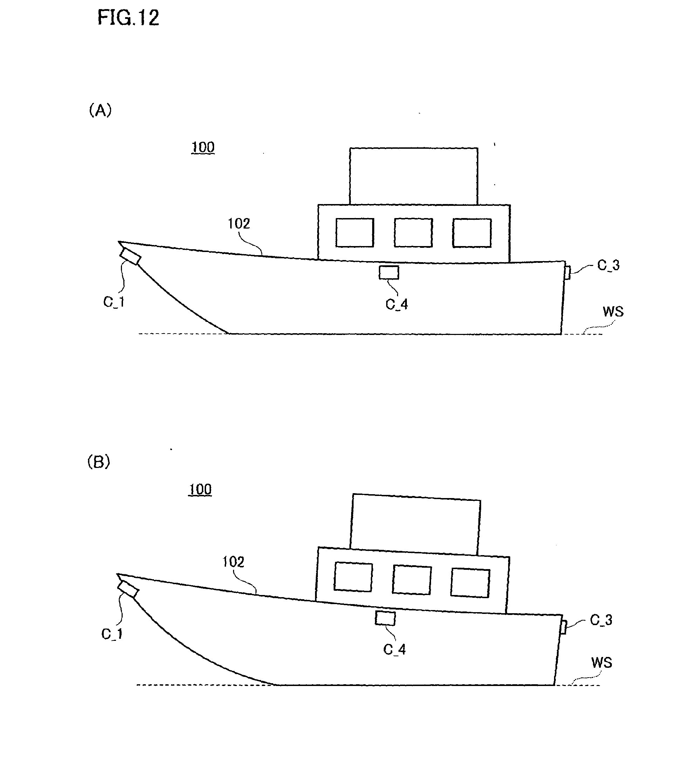

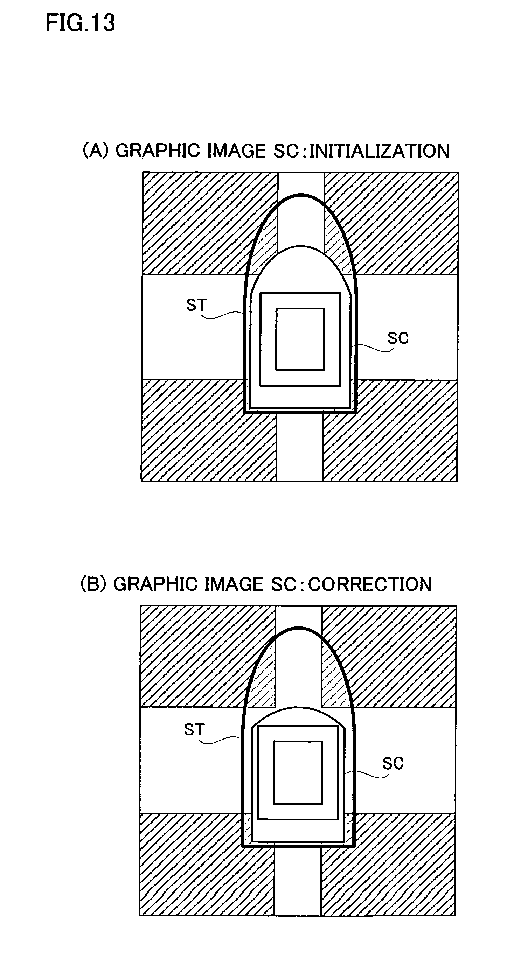

For reference, if the attitude of the ship hull 102 is changed between an attitude shown in Figure 12(A) and an attitude shown in Figure 12(B), the graphic image SC is reproduced according to a procedure shown in Figure 13(A) corresponding to the attitude shown in Figure 12(A), and the graphic image SC is reproduced according to a procedure shown in Figure 13(B) corresponding to the attitude shown in Figure 12(B).

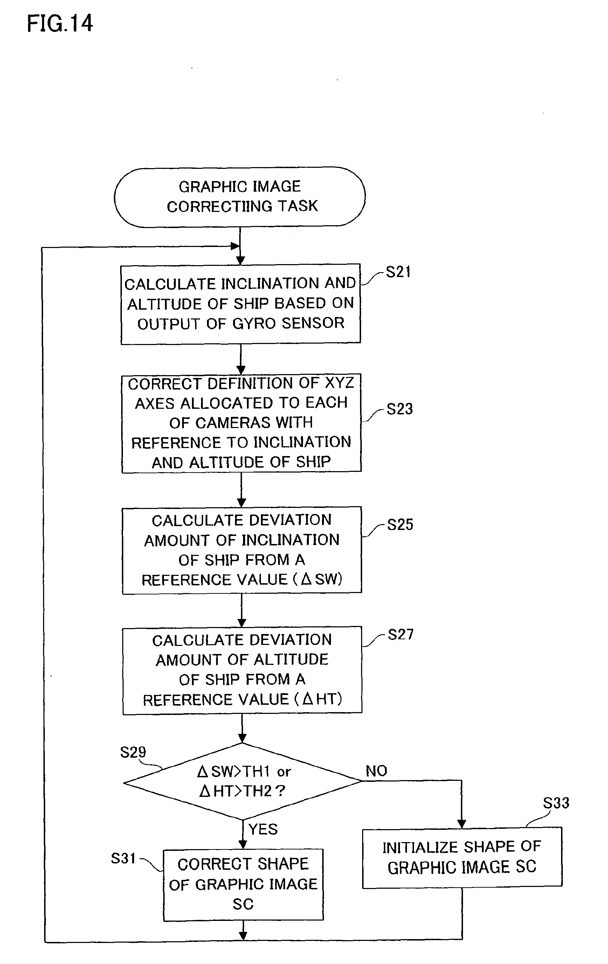

In order to correct the attitude information of the cameras C_1 to C_4 and the shape of the graphic image SC as described above, the CPU 12p further executes a graphic-image correcting task shown in Figure 14.

With reference to Figure 14, in a step 521, the inclination and altitude of the ship hull 102 are calculated based on the output of the gyro sensor 20. In a step S23, the definition of the XYZ axes allocated to each of the cameras C_1 to C_4 is corrected with reference to the inclination and the altitude calculated in the step S21. The corrected XYZ axes are reflected in the process in the step S3 shown in Figure 10, and as a result, the deviation among the bird's eye view images BEV_1 to BEV_4 is prevented.

In a step S25, a deviation amount from a reference value of the inclination of the ship hull 102 is calculated as "ΔSW", and in a step S27, a deviation amount from a reference value of the altitude of the ship hull 102 is calculated as "AHT". In a step S29, based on the calculated deviation amounts ΔSW and ΔHT, it is determined whether or not the rocking of the ship hull 102 is large. Specifically, when the deviation amount ΔSW exceeds a threshold value TH1 or the deviation amount ΔHT exceeds a threshold value TH2, it is determined that the rocking is large, and when the deviation amount ΔSW is equal to less than the threshold value TH1 or the deviation amount ΔHT is equal or less than the threshold value TH2, it is determined that the rocking is small.

When NO is determined in the step S29, the shape of the graphic image SC is initialized in a step S33, and the process returns to the step S21. If YES is determined in the step S29, the process proceeds to a step S31 in which the shape of the graphic image SC is corrected in consideration of the rocking of the ship hull 102. The corrected shape of the graphic image SC is equivalent to the cross-sectional shape obtained by cutting the ship hull 102 with the draft line DL of the rocked ship hull 102. Thereby, the deviation between the shape of the graphic image SC and the cross-sectional shape of the ship hull 102 at the draft line DL is prevented The process in the step S31 is reflected in the process in the step S9 shown in Figure 10. Upon completion of the process in the step S3 1, the process returns to the step S21.

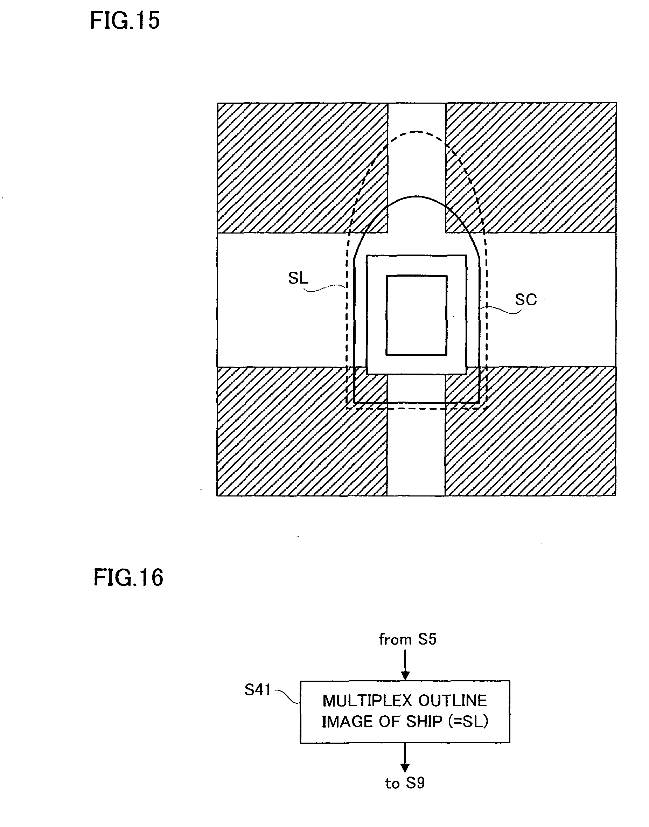

Furthermore, in this embodiment, the graphic image ST representing a whole of the aerially viewed ship 100 is transparently multiplexed onto the whole-circumference bird's eye view image (see Figure 7). Instead of this, however, an outline image SL that represents the extension (outline) of the aerially viewed ship 100 may optionally be multiplexed onto the whole-circumference bird's eye view image according to a procedure shown in Fig 15. In this case, it is preferred that the CPU 12p execute the process in the step S41 shown in Figure 16 (process for multiplexing the outline image SL onto the whole-circumference bird's eye view image) instead of the process in the step S7 shown in Figure 10.

Moreover, in this embodiment, the whole-circumference bird's eye view image obtained by aerially viewing a whole circumference of the ship 100 is displayed. However, instead of this, it may be optionally configured so that only one portion of the bird's eye view image is displayed and the one portion of the bird's eye view image that should be displayed is updated based on a moving direction, a moving speed, the attitude, etc., of the ship 100.

In this embodiment, the ship 100 is assumed as a moving object, however, an aircraft or a large dump truck may also be assumed as the moving object When the aircraft is assumed, a plurality of cameras are installed in an obliquely downward attitude, under a body of the aircraft or under the wings. A graphic image or an outline image representing a whole of the aerially viewed aircraft is transparently multiplexed onto a bird's eye view image based on output of the plurality of cameras. Thereby, a maneuverability during take-off and landing is improved.

When the large dump truck is assumed, a plurality of cameras are installed in an obliquely downward attitude between a vehicle main body and tires. A graphic image or an outline image representing a whole of the aerially viewed dump truck is transparently multiplexed onto a bird's eye view image based on output of the plurality of cameras. Thereby, a maneuverability during a certain work is improved.

Notes relating to the above-described embodiment will be shown below. It is possible to arbitrarily combine these notes with the above-described embodiment unless any contradiction occurs.

The coordinate transformation for producing a bird's eye view image from a photographed image, which is described in the embodiment, is generally called a perspective projection transformation. Instead of using this perspective projection transformation, the bird's eye view image may also be optionally produced from the photographed image through a well-known planer projection transformation. When the planer projection transformation is used, a homography matrix (coordinate transformation matrix) for transforming a coordinate value of each pixel on the photographed image into a coordinate value of each pixel on the bird's eye view image is evaluated at a stage of a camera calibrating process. A method of evaluating the homography matrix is well known. Then, during image transformation, the photographed image may be transformed into the bird's eye view image based on the homography matrix. In either way, the photographed image is transformed into the bird's eye view image by projecting the photographed image on the bird's eye view image.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A maneuvering assisting apparatus, comprising:

   an imager, arranged in a downward attitude in a moving object, which captures surroundings of the moving object;
   a creator which creates a surrounding image representing in an aerially viewed manner the surroundings of the moving object, based on output of said imager; and
   a first multiplexer which transparently multiplexes a first moving-object image representing at least an extension of the aerially viewed moving object, onto the surrounding image created by said creator.

2. A maneuvering assisting apparatus according to claim 1, wherein said first moving-object image is equivalent to an image representing a whole of the aerially viewed moving object

3. A maneuvering assisting apparatus according to claim 1, further comprising a second multiplexer which multiplexes a second moving-object image representing one portion of the aerially viewed moving object, onto the surrounding image created by said creator.

4. A maneuvering assisting apparatus according to claim 3, wherein said second multiplexer non-transparently multiplexes the second moving-object image.

5. A maneuvering assisting apparatus according to claim 3, wherein the moving object is equivalent to a ship, and a size of one portion of the moving object represented by the second moving-object image is equivalent to a size of a cut-out surface obtained by cutting out the moving object with a draft line.

6. A maneuvering assisting apparatus according to claim 3, further comprising:

   an inclination detector which detects a change in inclination and/or altitude of the moving object; and
   a corrector which corrects the size of one portion of the moving object represented by the second moving-object image, with reference to a detection result of said inclination detector.

## FIG.1

## FIG.2

(A)

(B)

# FIG.3

(A)

100

106

102

104

C_1

C_4

C_3

WS

(B)

100

C_2

102

106

104

C_3

C_1

DL

C_4

WS

FIG.4

# FIG.5

(A) BIRD'S EYE VIEW IMAGE
BEV_1

X1

Y1

(B) BIRD'S EYE VIEW IMAGE
BEV_2

X2

Y2

(C) BIRD'S EYE VIEW IMAGE
BEV_3

X3

Y3

(D) BIRD'S EYE VIEW IMAGE
BEV_4

X4

Y4

FIG.6

FIG.7

FIG.8

FIG.9

# FIG.10

```
        ┌─────────────────┐
        │     IMAGE        │
        │ PROCESSING TASK  │
        └────────┬────────┘
                 │
                 ▼
  S1   ┌──────────────────────┐
       │     FETCH IMAGE       │
       └──────────┬───────────┘
                  │
                  ▼
  S3   ┌──────────────────────┐
       │ CREATE BIRD'S EYE VIEW│
       │        IMAGE          │
       └──────────┬───────────┘
                  │
                  ▼
  S5   ┌──────────────────────┐
       │       CREATE          │
       │ WHOLE-CIRCUMFERENCE   │
       │ BIRD'S EYE VIEW IMAGE │
       └──────────┬───────────┘
                  │
                  ▼
  S7   ┌──────────────────────┐
       │    TRANSPARENTLY       │
       │  MULTIPLEX GRAPHIC     │
       │ IMAGE REPRESENTING     │
       │ WHOLE OF SHIP(=ST)     │
       └──────────┬───────────┘
                  │
                  ▼
  S9   ┌──────────────────────┐
       │  NON-TRANSPARENTLY     │
       │  MULTIPLEX GRAPHIC     │
       │ IMAGE REPRESENTING     │
       │  ONE PORTION OF        │
       │     SHIP(=SC)          │
       └──────────┬───────────┘
                  │
                  ▼
  S11  ┌──────────────────────┐
       │   OUTPUT SHIP-        │
       │   MANEUVERING         │
       │ ASSISTING IMAGE       │
       │ TOWARD DISPLAY        │
       │    DEVICE             │
       └──────────┬───────────┘
                  │
```

17

FIG.11

GYRO SENSOR `18`

`10`

C_1 CAMERA

C_2 CAMERA

C_3 CAMERA

C_4 CAMERA

`12`
IMAGE PROCESSING CIRCUIT

MEMORY `12m`
W1 W2

`12p` CPU

DISPLAY DEVICE `16`

FLASH MEMORY `14`

FIG.12

(A)

(B)

# FIG.13

(A) GRAPHIC IMAGE SC : INITIALIZATION

ST

SC

(B) GRAPHIC IMAGE SC : CORRECTION

ST

SC

FIG.14

```
        ┌─────────────────────────┐
        │     GRAPHIC IMAGE       │
        │    CORRECTIING TASK     │
        └───────────┬─────────────┘
                    │
   ┌────────────────┼──────────────────────┐
   │                ▼                        │
   │   ┌─────────────────────────┐  ╱S21    │
   │   │ CALCULATE INCLINATION AND│          │
   │   │ ALTITUDE OF SHIP BASED ON│          │
   │   │   OUTPUT OF GYRO SENSOR  │          │
   │   └────────────┬────────────┘          │
   │                ▼                        │
   │   ┌─────────────────────────┐          │
   │   │ CORRECT DEFINITION OF XYZ│          │
   │   │   AXES ALLOCATED TO EACH │  ╱S23    │
   │   │      OF CAMERAS WITH     │          │
   │   │  REFERENCE TO INCLINATION│          │
   │   │   AND ALTITUDE OF SHIP   │          │
   │   └────────────┬────────────┘          │
   │                ▼                        │
   │   ┌─────────────────────────┐          │
   │   │   CALCULATE DEVIATION    │  ╱S25    │
   │   │  AMOUNT OF INCLINATION   │          │
   │   │    OF SHIP FROM A        │          │
   │   │ REFERENCE VALUE (ΔSW)    │          │
   │   └────────────┬────────────┘          │
   │                ▼                        │
   │   ┌─────────────────────────┐  ╱S27    │
   │   │   CALCULATE DEVIATION    │          │
   │   │   AMOUNT OF ALTITUDE     │          │
   │   │     OF SHIP FROM A       │          │
   │   │  REFERENCE VALUE (ΔHT)   │          │
   │   └────────────┬────────────┘          │
   │                ▼                        │
   │   S29      ╱◇◇◇◇◇◇◇◇╲      NO           │
   │         ╱  ΔSW>TH1 or  ╲ ─────────┐    │
   │         ╲  ΔHT>TH2 ?   ╱          │    │
   │           ╲◇◇◇◇◇◇◇◇◇╱            ▼    │
   │                │YES          ┌──────────────┐
   │                ▼             │ INITIALIZE   │ ╱S33
   │  S31  ┌──────────────┐       │ SHAPE OF     │
   │       │ CORRECT SHAPE│       │ GRAPHIC      │
   └───────│ OF GRAPHIC   │       │ IMAGE SC     │
           │ IMAGE SC     │       └──────┬───────┘
           └──────┬───────┘              │
                  ▼◄──────────────────────┘
```

FIG.15

SL

SC

FIG.16

from S5

S41 — MULTIPLEX OUTLINE
IMAGE OF SHIP (=SL)

to S9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008262451 A